# EUROPÄISCHE PATENTANMELDUNG

(11) **EP 1 221 806 A2**
(43) Veröffentlichungstag der Anmeldung: **10.07.2002**
(21) Anmeldenummer: 01130791.5
(22) Anmeldetag: 22.12.2001
(51) Int. Cl.: H04M 3/54

(54) **Rufweiterleitung bei fehlender Erreichbarkeit eines Mobilteilnehmers**

(30) Priorität: 04.01.2001 DE 10100165
(71) Anmelder: Tenovis GmbH & Co. KG, 60326 Frankfurt am Main (DE)
(72) Erfinder: Bürgel, Steffen, 61440 Oberursel (DE); Garcia, Raymond, 64380 Rossdorf (DE)
(74) Vertreter: Patentanwaltskanzlei WILHELM & BECK

(57) **Zusammenfassung**

Erfindungsgemäß wird ein Telekommunikationssystem vorgeschlagen, bei dem eine Rufweiterleitung erfolgt, wenn ein Mobilteilnehmer (5-7) nicht erreichbar ist. Zu diesem Zweck ist der Mobilteilnehmer (5-7) mit manuell vorab einstellbaren Mitteln (11) ausgebildet, mit denen eine weitere Zieladresse (2, 5-10) vorwählbar ist. Nach der Aktivierung der Rufumleitung durch den Bediener wird ein ankommender Anruf für einen befristeten Zeitraum gespeichert und/oder an einen weiteren Zielteilnehmer (2, 5-10) weitergeleitet, sofern kein Verbindungsaufbau möglich ist. Die Rufweiterleitung wird automatisch aufgehoben, wenn die vorherigen Mängel, beispielsweise der Mobilteilnehmer (5-7) ist ausgeschaltet, der Akku ist leer oder der Sendebereich wurde verlassen, nicht mehr zutreffen.

## Beschreibung

Die Erfindung geht aus von einem Telekommunikationssystem, das mit wenigstens einem Mobilteilnehmer, einer Vermittlungsstelle für ankommende Anrufe und einer Sende-/Empfangseinrichtung zur Übermittlung eines Anrufes an den Mobilteilnehmer nach der Gattung des Hauptanspruchs ausgebildet ist.

In heutigen Telekommunikationssystemen gehen Anrufe oder Nachrichten verloren, wenn sich beispielsweise der Mobilteilnehmer mit seinem Empfangsgerät (Handset) außerhalb des Sendebereiches der Sende-/Empfangseinrichtung befindet. In einigen Systemen erfolgt höchstens ein Eintrag in die zentrale Anrufliste des Vermittlungssystems. Auch kann es vorkommen, dass das Handset ausgeschaltet oder dessen Akku leer ist, so dass ein störungsfreier Verbindungsaufbau nicht möglich ist. Ein Anrufer erhält in diesen Fällen als Zeichen der Nichterreichbarkeit des Teilnehmers - je nach dem verwendeten System - lediglich ein Frei- oder Besetztzeichen. Die Ursache für den fehlenden Verbindungsaufbau erfährt er nicht, auch erfolgt keine Rufweiterleitung zu einem anderen Teilnehmer. Andererseits kann der Mobilteilnehmer allenfalls feststellen, dass er angerufen wurde und gegebenenfalls noch von wem, so dass er in diesem Fall zu einem späteren Zeitpunkt zurückrufen kann. Dieser Zustand kann unter Umständen schwerwiegende Folgen nach sich ziehen, zumal die zuverlässige und ungebundene schnelle Erreichbarkeit eines Mobilteilnehmers oder aber die Erreichbarkeit z.B. eines anderen Mitarbeiters, eines Sekretariats oder auch der Zentrale, in der heutigen Zeit als wesentliche Vorteile angesehen werden.

Es ist auch schon bekannt, dass beispielsweise in Mobilfunknetzen (bei Handys im GSM-Netz) ein Anruf von der Netz-Zentrale aus auf ein anderes Empfangsgerät weitergeschaltet wird, wenn das Handy nicht eingeloggt ist. Dieses funktioniert aber nur in bestimmtem öffentlichen Netzen und ist zudem auch kostenpflichtig.

Weiterhin sind im Festnetz Telefonapparate bekannt, mit denen eine kontinuierliche Rufumleitung zu einer Ersatzzieladresse einstellbar ist. Beispielsweise kann bei einem ISDN-Telefon mit einer Tastenkombination eine alternative Zieladresse eingegeben werden. Zu dieser Zieladresse werden dann alle ankommenden Anrufe kontinuierlich umgeleitet. Dabei erscheint ungünstig, dass die Rufumleitung solange bestehen bleibt, bis sie wieder manuell zurückgeschaltet wird. Bei nur kurzzeitigen Rufumleitungen muss somit ständig umprogrammiert werden. Diese Prozedur wäre bei Mobiltelefonen in der Handhabung sicher sehr umständlich und wenig benutzerfreundlich.

Aufgabe der Erfindung ist es, eine benutzerfreundlichere Rufweiterleitung für einen Mobilteilnehmer bereitzustellen, die immer dann automatisch eingeschaltet wird, wenn der angerufene Mobilteilnehmer aus technischen oder anderen Gründen nicht erreichbar ist.

Die Lösung dieser Aufgabe wird insbesondere durch die Merkmale des Hauptanspruchs erreicht. Besonders vorteilhaft erscheint dabei, dass die Rufweiterleitung an eine weitere Zieladresse nicht ständig und fest eingestellt bestehen bleibt, sondern individuell vom Benutzer voreinstellbar ist. Dadurch wird eine größtmögliche Flexibilität erreicht. Der Benutzer kann nach Bedarf die Anrufe beispielsweise auf einen Festnetz-Apparat oder einen weiteren Mobilteilnehmer leiten, von dem der Anruf vertretungsweise entgegengenommen werden kann. Insbesondere auch durch die Speicherung geht kein Anruf verloren und der Anruf kann im Interesse des Anrufenden sofort bearbeitet werden. Als besonderer Vorteil wird auch angesehen, dass die Rufumleitung nur zeitweise aktiviert wird, wenn beispielsweise sich der Mobilteilnehmer (Handset) außerhalb des Sendebereiches befindet, der Akku leer ist oder aus sonstigen Gründen keine Verbindung zustande kommt. Die Rufweiterleitung wird wieder aufgehoben, sobald die vorgenannten Hindernisse nicht mehr vorliegen.

In den abhängigen Ansprüchen sind vorteilhafte Weiterbildungen und Verbesserungen des im Hauptanspruch angeführten Telekommunikationssystems gegeben. Als besonders vorteilhaft wird angesehen, dass mit wenigstens einem Schaltelement die Rufweiterleitung an den weiteren Zielteilnehmer vorwählbar ist. Dieser Vorgang ist leicht steuerbar und fordert vom Benutzer keine besondere Fachkenntnisse.

Günstig ist auch, dass die Rufweiterleitung ohne Zeitverzögerung erfolgt. Dadurch wird vermieden, dass ein ankommender Anruf während der Umschaltphase verloren geht.

Wird als weitere Zieladresse die Vermittlungsstelle gewählt, dann kann von hier aus die Weiterleitung des Anrufes an einen geeigneten Empfänger gesteuert werden. Beispielsweise kann so bei Ankunft auch eines Faxes ein zugeordnetes Faxgerät angesteuert werden. Alternativ kann die Vermittlungsstelle vorteilhaft die Anrufweiterleitung auch für mehrere Mobilteilnehmer steuern.

Die Rufweiterleitung an ein mobiles oder drahtgebundenes Empfangsgerät des Telekommunikationssystems hat den Vorteil, dass diese Verbindungen kostenlos sind, während in öffentlichen Netzen in der Regel für zusätzliche Dienste eine Gebühr zu zahlen ist.

Eine besonders günstige Lösung wird auch darin gesehen, dass der Mobilteilnehmer und/oder der weitere Zielteilnehmer einen Sprachspeicher aufweisen. Bei Nichterreichen des Mobilteilnehmers und bei deaktivierter Rufweiterleitung kann der Anrufer immer noch eine Nachricht erhalten, aus der der Grund für den mangelnden Verbindungsaufbau ersichtlich ist. Das kann helfen, gegebenenfalls zu einem späteren Zeitpunkt den Anruf erneut zu versuchen.

Vorteilhaft ist auch, die Rufumleitung alternativ durch den Systemadministrator durchführen zu lassen. Dadurch können auf einfach Weise Zugangsberechtigungen gesteuert und eventuell anfallende Kosten besser kontrolliert werden. Dieses erscheint wichtig, wenn beispielsweise auch vertrauliche Gespräche und/oder Daten übertragen werden sollen.

Ein Ausführungsbeispiel der Erfindung wird in der nachfolgenden Beschreibung anhand der Figuren näher erläutert.

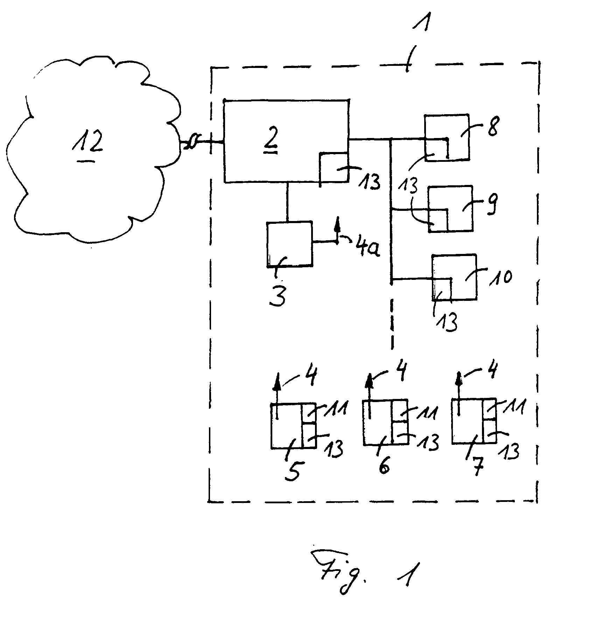

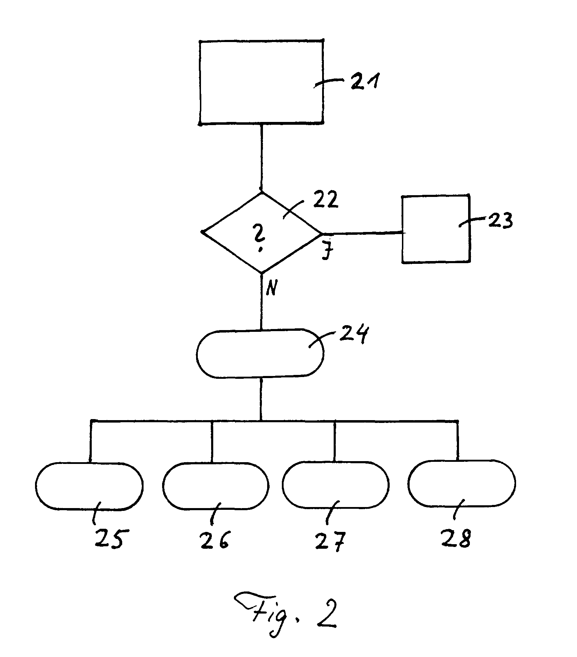

Figur 1 zeigt ein Blockschaltbild mit einem Kommunikationssystem in schematischer Ausführung und Figur 2 zeigt ein Flussdiagramm für die Steuerung der Rufweiterleitung.

Wie der Figur 1 entnehmbar ist, ist ein Kommunikationssystem 1 beispielsweise mit einem öffentlichen Netz 12 verbunden. Von diesem Netz 12 gelangt ein Anruf zunächst zu einer Vermittlungsstelle 2 des Kommunikationssystems 1. Prinzipiell kann das Kommunikationsnetz 1 nach den bekannten Standards wie DECT oder ähnliche ausgebildet sein. Diesem Netz 1 sind ein oder mehrere Mobilteilnehmer 5-7 zugeordnet, wobei jeder Mobilteilnehmer ein Handset mit den notwendigen technischen Einrichtungen aufweist. Die Handsets sind per se bekannt und müssen in ihrer Grundfunktion nicht näher beschrieben werden.

Zum besseren Verständnis sei darauf hingewiesen, dass unter dem Begriff Mobilteilnehmer jeweils das mobile Telekommunikationsgerät wie Handset, Handy, Laptop, WAP-(UMTS)-Handy usw. gemeint ist.

Um die Mobilteilnehmer 5-7 ansteuern zu können, weist die Vermittlungsstelle 2 eine entsprechende Sende-/Empfangseinrichtung 3 auf, die über eine Antenne 4a die Verbindung zu den Antennen 4 der Mobilteilnehmer 5-7 aufbaut.

In weiterer alternativer Ausgestaltung der Erfindung weist die Vermittlungsstelle 2 einen Sprachspeicher 13 auf, in dem ein Sprachtext oder Informationen gespeichert sind. Dieser Sprachtext oder die Informationen enthalten Hinweise über einen nicht zustandegekommenden Verbindungsaufbau wie beispielsweise "Der Teilnehmer ist vorübergehend nicht erreichbar". Diese Hinweise werden dann, wenn der Mobilteilnehmer nicht eingeloggt ist oder ein technischer Mangel wie eine leere Batterie, Überschreitung des Sendebereichs oder dergleichen vorliegen, und wenn keine Rufumleitung aktiviert ist, an den Anrufer gesendet, so dass dieser zu einem späteren Zeitpunkt einen neuen Anrufversuch starten kann.

Die Mobilteilnehmer 5-7 weisen als Besonderheit Mittel 11 auf, mit denen ein weiteres Mobilgerät 5-7 mit seiner Zieladresse und/oder auch eine drahtgebundene Zieladresse wie ein Telefon 8-10 vorwählbar sind. Die tatsächliche Anwahl der weiteren Zieladresse erfolgt jedoch erst dann, wenn die Rufweiterleitung beispielsweise von dem Benutzer aktiviert wurde. Die Rufweiterleitung erfolgt dann automatisch. Sie erfolgt jedoch nur, wenn der zuvor angewählte Mobilteilnehmer 5-7 aus den oben genannten Gründen nicht erreichbar war.

Die Rufumleitung wird ohne Zeitverzögerung wieder deaktiviert, sobald der angewählte Mobilteilnehmer 5-7 wieder erreichbar ist.

Die Anzahl der Teilnehmer ist in Bezug auf die Erfindung nicht begrenzt, sondern lediglich abhängig von der Kapazität des Kommunikationssystems 1.

Alternativ ist auch vorsehbar, dass die weiteren Zielteilnehmer 8-10 in einem PSTN-, ISDN- oder Mobilfunknetz eingebunden sind.

In einer bevorzugten Ausführungsform weisen die Mittel 11 wenigstens ein Schaltelement auf, mit dem der weitere Zielteilnehmer 2, 5-10 vorwählbar ist. Die Mittel 11 sind dabei so ausgebildet, dass bei einem fehlerhaften Verbindungsaufbau zwischen der Vermittlungsstelle 2 und dem ausgewählten Mobilteilnehmer 5-7 die Rufweiterleitung ohne Zeitverzögerung durchgeführt wird. Die Aktivierung der Rufweiterleitung erfolgt dabei durch den Benutzer des Mobilteilnehmers 5-7 oder durch den Systemadministrator des Kommunikationssystems 1. Dies ist in der Regel dann sinnvoll, wenn als weitere Zieladresse die Vermittlungsstelle 2 voreingestellt wurde.

Nach der Aktivierung wird die Rufweiterleitung automatisch durchgeführt. Die Rufumleitung wird sofort wieder aufgehoben, wenn die oben genannten Mängel behoben sind und ein Verbindungsaufbau erfolgreich durchgeführt werden konnte.

Wie der Figur 1 weiter entnehmbar ist, weisen die Mobilteilnehmer 5-7 und/oder auch die drahtgebundenen Teilnehmer 8-10 optional einen Sprachspeicher 13 auf. Dieser Sprachspeicher 13 ist ähnlich ausgebildet, wie derjenige der Vermittlungsstelle 2. Er erfüllt alternativ zum Sprachspeicher 13 der Vermittlungsstelle 2 die gleiche Aufgabe: Wenn kein Verbindungsaufbau möglich war und die Rufweiterleitung ausgeschaltet ist, wird der Sprachspeicher aktiv geschaltet und die gespeicherten Informationen (Sprache oder Text) an den Anrufer gesendet.

Grundsätzlich ist jedoch vorgesehen, dass die Rufweiterleitung von der Bedienperson des Mobilteilnehmers 5-7 und/oder dem Systemadministrator steuerbar ist. Dies hat den Vorteil, dass im Falle eines Defektes eines einzelnen Mobilgerätes 5-7 der Systemadministrator immer noch eingreifen kann, so dass auch in diesem Fall keine Anrufe verloren gehen können.

Die Funktionsweise der Rufumleitung wird anhand des Flussdiagramms der Figur 2 näher erläutert. In Position 21 wird beispielsweise ein Mobilteilnehmer 5-7 des Telekommunikationssystems 1 angerufen. Dies kann dadurch erfolgen, dass vom Festnetz aus die zentrale Nummer der Vermittlungsstelle 2 mit der entsprechenden Durchwahlnummer beispielsweise für den Mobilteilnehmer 5 angewählt wird. Die Erreichbarkeit des Mobilteilnehmers hängt nun von verschiedenen Umständen ab. Einerseits kann der Mobilteilnehmer 5 ausgeschaltet sein. Andererseits kann er sich außerhalb des Sendebereiches der Sende-/Empfangseinrichtung 3 befinden. Auch kann sein Akku leer sein oder ein sonstiger Defekt vorliegen, so dass ein ordnungsgemäßer Verbindungsaufbau nicht zustande kommen kann. Dieses wird vorzugsweise von der Vermittlungsstelle 2 in Position 22 geprüft. Diese Prüfung kann einfach durchgeführt werden, da die Verbindung zum Mobilteilnehmer 5 nach dem Einloggen kontinuierlich überprüft wird.

Ist die Prüfung positiv verlaufen, d.h. ist die Verbindung zum Mobilteilnehmer hergestellt, dann erfolgt die normale Gesprächsaufnahme (Position 23).

Ist dagegen die Verbindung gestört, dann prüft beispielsweise die Vermittlungsstelle 2, ob und zu welcher weiteren Zieladresse die Rufweiterleitung aktiviert wurde (Position 24). Die Verbindung wird dann zu einem der weiteren Zielteilnehmer der Positionen 25 bis 28 weitergeleitet. Position 25 entspricht beispielsweise einem externen Anschluss, Position 26 sei die Vermittlungsstelle 2, Position 27 sei der Sprachspeicher 13 und Position 28 sei eine der Nebenstellen 8-10.

Ist die Störung zum Mobilteilnehmer 5 beseitigt, dann wird die Rufweiterleitung sofort deaktiviert, damit beim nächsten Anruf der gewünschte Mobilteilnehmer 5 wieder anwählbar ist.

Um jedoch in Grenzfällen ein ständiges Hin- und Herschalten zwischen dem gestörten Mobilteilnehmer 5-7 und dem weiteren Zielteilnehmer zu vermeiden, kann alternativ eine zeitliche Hysterese vorgegeben werden.

## Patentansprüche

1. Telekommunikationssystem mit wenigstens einem Mobilteilnehmer (5-7), mit einer Vermittlungsstelle (2) für einen ankommenden Anruf, mit einer Sende-/Empfangseinrichtung (3) zur Übermittlung des Anrufes an den Mobilteilnehmer (5-7), sofern der Mobilteilnehmer zur Annahme des Anrufs aktiv geschaltet ist und mit einer Einrichtung zur Rufweiterleitung, falls der Mobilteilnehmer nicht erreichbar ist,
**dadurch gekennzeichnet,**
**dass** der Mobilteilnehmer (5-7) mit einem Handset ausgebildet ist, das manuell vorab einstellbare Mittel (11) für die Rufweiterleitung aufweist, mit denen bei Nichterreichen des Mobilteilnehmers (5-7) ein ankommender Anruf für einen befristeten Zeitraum gespeichert und/oder an einen weiteren Zielteilnehmer (5-10) weitergeleitet wird, und dass bei Erreichbarkeit des Mobilteilnehmers (5-7) die Rufweiterleitung automatisch aufgehoben wird.

2. Telekommunikationssystem nach Anspruch 1, **dadurch gekennzeichnet, dass** die Mittel (11) wenigstens ein Schaltelement aufweisen, mit dem der weitere Zielteilnehmer (2, 5-10) vorwählbar ist.

3. Telekommunikationssystem nach Anspruch 1 oder 2, **dadurch gekennzeichnet, dass** die Mittel (11) ausgebildet sind, bei fehlender Funktionsbereitschaft des Mobilteilnehmers (5-10) den vorgewählten weiteren Zielteilnehmer (2, 5-10) ohne Zeitverzögerung anzuwählen.

4. Telekommunikationssystem nach einem der vorhergehenden Ansprüche, **dadurch gekennzeichnet, dass** der weitere Zielteilnehmer die Vermittlungsstelle (2) ist.

5. Telekommunikationssystem nach einem der vorhergehenden Ansprüche, **dadurch gekennzeichnet, dass** der weitere Zielteilnehmer ein mobiles Empfangsgerät (5-7) nach dem DECT-Standard ist.

6. Telekommunikationssystem nach einem der Ansprüche 1 bis 4, **dadurch gekennzeichnet, dass** der weitere Zielteilnehmer ein drahtgebundenes Empfangsgerät (8-10) in einem PSTN- oder ISDN-Netz ist.

7. Telekommunikationssystem nach einem der vorhergehenden Ansprüche, **dadurch gekennzeichnet, dass** der Mobilteilnehmer (5-7) und/oder der weitere Zielteilnehmer (2, 8-10) einen Sprachspeicher (13) aufweist.

8. Telekommunikationssystem nach Anspruch 7, **dadurch gekennzeichnet, dass** in dem Sprachspeicher (13) eine Antwortinformation gespeichert ist.

9. Telekommunikationssystem nach einem der Ansprüche 6 bis 8, **dadurch gekennzeichnet, dass** bei einem erfolglosen Verbindungsaufbau und ausgeschalteter Rufweiterleitung an den weiteren Zielteilnehmer (2, 5-10) die gespeicherte Antwortinformation an den Anrufer gesendet wird.

10. Telekommunikationssystem nach einem der vorhergehenden Ansprüche, **dadurch gekennzeichnet, dass** die Rufweiterleitung von einem Systemadministrator vorgebbar und/oder aktivierbar ist.

11. Telekommunikationssystem nach einem der vorhergehenden Ansprüche, **dadurch gekennzeichnet, dass** die Rufweiterleitung für Gespräche und/oder Daten ausgebildet ist.
